# EUROPEAN PATENT APPLICATION

(11) **EP 4 564 751 A1**
(43) Date of publication of application: **04.06.2025**
(21) Application number: 22952575.3
(22) Date of filing: 29.07.2022
(51) Int. Cl.: H04L 25/02

(54) **CHANNEL ESTIMATION METHOD AND APPARATUS**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN); LI, Song, Beijing 100085 (CN)
(74) Representative: Stöckeler, Ferdinand
(86) International application number: PCT/CN2022/109259
(87) International publication number: WO 2024/021130

(57) **Abstract**

Disclosed in embodiments of the present disclosure are a channel estimation method and apparatus. The method is implemented by a terminal device, and comprises: receiving configuration information of a data transmission channel configured by a network side device for the terminal device (S201); and performing channel estimation on the basis of an artificial intelligence model corresponding to the configuration information of the data transmission channel (S202). By means of the technical solution of the present disclosure, a terminal device can receive configuration information of a data transmission channel configured by a network side device for the terminal device, and perform channel estimation on the basis of an artificial intelligence model corresponding to the configuration information. In this way, the terminal device can select an artificial intelligence model suitable for the current channel configuration to perform channel estimation, thereby improving the accuracy of channel estimation based on artificial intelligence.

## Description

### TECHNICAL FIELD

The disclosure relates to a field of communication technologies, and in particular to a method for channel estimation and a device thereof.

### BACKGROUND

In related arts, artificial intelligence (AI) can be used for channel estimation, but the channel estimation depends on demodulation reference signal (DMRS) configuration. In a new radio (NR) system, the DMRS configuration may include many specific configurations in different aspects in each physical resource block (PRB). In a case that channel estimation for all different configurations is performed by using one same AI model, in practical applications, the AI model may not be able to fully extract corresponding features of each different configuration, resulting in reduced accuracy of the channel estimation.

### SUMMARY

Embodiments of the present disclosure provide a method for channel estimation and a device thereof, which may be applied to the Internet of Vehicle, such as vehicle to everything (V2X) communication, long-term evolution-vehicle (LTE-V) communication, vehicle to vehicle (V2V) communication, etc., or may be applied to fields of intelligent driving, intelligent connected vehicles, etc. By receiving configuration information of a data transmission channel configured by a network side device for a terminal, channel estimation is performed by an artificial intelligence (AI) model corresponding to the configuration information, to improve an accuracy of the channel estimation.

According to a first aspect of embodiments of the disclosure, a method for channel estimation is provided. The method is performed by a terminal, and includes: receiving configuration information of a data transmission channel configured by a network side device for the terminal; and performing channel estimation based on an AI model corresponding to the configuration information of the data transmission channel.

In this technical solution, the terminal may receive the configuration information of the data transmission channel configured by the network side device for the terminal, and perform the channel estimation by using the AI model corresponding to the configuration information. In this way, the terminal may select an AI model suitable for current channel configuration to perform the channel estimation, thus improving an accuracy of AI-based channel estimation.

In an implementation, the configuration information of the data transmission channel includes at least one of: a physical resource block (PRB) bundling size, a physical downlink shared channel (PDSCH) mapping type, a count of demodulation reference signal (DMRS) resource elements (REs), a count of continuous orthogonal frequency division multiplexing (OFDM) symbols occupied by a DMRS, a DMRS configuration type, or a count of code division multiplexing (CDM) groups occupied by a data-free DMRS antenna port.

In an optional implementation, the configuration information of the data transmission channel includes the PRB bundling size, and performing the channel estimation based on the AI model corresponding to the configuration information of the data transmission channel includes: determining a target AI model corresponding to the PRB bundling size from a plurality of AI models; and performing the channel estimation based on the target AI model.

In this technical solution, the terminal may perform the channel estimation using an appropriate AI model according to the received different PRB bundling size. In this way, the terminal may select an AI model suitable for current channel configuration to perform the channel estimation, thus improving the accuracy of the AI-based channel estimation.

In an optional implementation, the configuration information of the data transmission channel includes the PDSCH mapping type, and performing the channel estimation based on the AI model corresponding to the configuration information of the data transmission channel includes: determining a target AI model corresponding to the PDSCH mapping type from a plurality of AI models; and performing the channel estimation based on the target AI model.

In this technical solution, the terminal may perform the channel estimation using an appropriate AI model according to the received different PDSCH mapping type. In this way, the terminal may select an AI model suitable for current channel configuration to perform the channel estimation, thus improving the accuracy of the AI-based channel estimation.

In an optional implementation, the configuration information of the data transmission channel includes the count of DMRS REs, and performing the channel estimation based on the AI model corresponding to the configuration information of the data transmission channel includes: determining that a DMRS configured by the network side device for the terminal is a fronted loaded DMRS according to the count of DMRS REs, and performing the channel estimation based on an AI model corresponding to the fronted loaded DMRS; or, determining that DMRSs configured by the network side device for the terminal include a fronted loaded DMRS and an additional DMRS according to the count of DMRS REs, and performing the channel estimation based on an AI model corresponding to the fronted loaded DMRS and the additional DMRS.

In this technical solution, the terminal may perform the channel estimation using an appropriate AI model according to the received different count of DMRS REs. In this way, the terminal may select an AI model suitable for current channel configuration to perform the channel estimation, thus improving the accuracy of the AI-based channel estimation.

In an optional implementation, the configuration information of the data transmission channel includes the count of continuous OFDM symbols occupied by DMRS, and performing channel estimation based on the AI model corresponding to the configuration information of the data transmission channel includes: determining that a DMRS configured by the network side device for the terminal is a single-symbol DMRS according to the count of continuous OFDM symbols occupied by the DMRS, and performing the channel estimation based on an AI model corresponding to the single-symbol DMRS; or, determining that a DMRS configured by the network side device for the terminal is a double-symbol DMRS according to the count of continuous OFDM symbols occupied by the DMRS, and performing the channel estimation based on an AI model corresponding to the double-symbol DMRS.

In this technical solution, the terminal may select an appropriate AI model for the channel estimation according to the received different count of continuous OFDM symbols occupied by the DMRS. In this way, the terminal may select an AI model suitable for current channel configuration to perform the channel estimation, thus improving the accuracy of the AI-based channel estimation.

In an optional implementation, the configuration information of the data transmission channel includes the DMRS configuration type, and performing the channel estimation based on the AI model corresponding to the configuration information of the data transmission channel includes: performing the channel estimation based on a first AI model corresponding to the DMRS configuration type, in which, the DMRS configuration type is type 1; or, performing the channel estimation based on a second AI model corresponding to the DMRS configuration type, in which the DMRS configuration type is type 2, and the first AI model and the second AI model are different channel estimation models.

In this technical solution, the terminal may perform the channel estimation using an appropriate AI model according to the received different DMRS configuration type included in the configuration information of the data transmission channel. In this way, the terminal may select an AI model suitable for current channel configuration to perform the channel estimation, thus improving the accuracy of the AI-based channel estimation.

In an optional implementation, the configuration information of the data transmission channel includes the count of CDM groups occupied by the data-free DMRS antenna port, and performing the channel estimation based on the AI model corresponding to the configuration information of the data transmission channel includes: determining that a CDM group occupied by a DMRS antenna port configured by the network side device for the terminal is a first CDM group according to the count of CDM groups occupied by the data-free DMRS antenna port, and performing channel estimation based on a first AI model corresponding to the first CDM group; or, determining that a CDM group occupied by a DMRS antenna port configured by the network side device for the terminal is a second CDM group according to the count of CDM groups occupied by the data-free DMRS antenna port, and performing channel estimation based on a second AI model corresponding to the second CDM group; in which the configured DMRS is DMRS configuration type 1, and the first AI model and the second AI model are different channel estimation models.

In this technical solution, the terminal may perform the channel estimation using an appropriate AI model according to the received different count of CDM groups occupied by the data-free DMRS antenna port. In this way, the terminal may select an AI model suitable for current channel configuration to perform the channel estimation, thus improving the accuracy of the AI-based channel estimation.

In an optional implementation, the configuration information of the data transmission channel includes the count of CDM groups occupied by the data-free DMRS antenna port, and performing channel estimation based on the AI model corresponding to the configuration information of the data transmission channel includes: determining that a CDM group occupied by a DMRS antenna port configured by the network side device for the terminal is a first CDM group according to the count of CDM groups occupied by the data-free DMRS antenna port, and performing the channel estimation based on a first AI model corresponding to the first CDM group; or, determining that a CDM group occupied by a DMRS antenna port configured by the network side device for the terminal is a second CDM group according to the count of CDM groups occupied by the data-free DMRS antenna port, and performing CDM channel estimation based on a second AI model corresponding to the second CDM group; or, determining that a CDM group occupied by a DMRS antenna port configured by the network side device for the terminal is a third CDM group according to the count of CDM groups occupied by the data-free DMRS antenna port, and performing CDM channel estimation based on a third AI model corresponding to the third CDM group; in which the configured DMRS is DMRS configuration type 2, and the first AI model, the second AI model and the third AI model are all different channel estimation models.

In this technical solution, the terminal may perform the channel estimation using an appropriate AI model according to the received different count of CDM groups occupied by the data-free DMRS antenna port. In this way, the terminal may select an AI model suitable for current channel configuration to perform the channel estimation, thus improving the accuracy of the AI-based channel estimation.

According to a second aspect of embodiments of the present disclosure, another method for channel estimation is provided. The method is performed by a network side device, and includes: sending configuration information of a data transmission channel to a terminal, in which the configuration information is configured to instruct the terminal to perform channel estimation based on a corresponding AI model.

In an implementation, the configuration information of the data transmission channel includes at least one of: a PRB bundling size; a PDSCH mapping type; a count of DMRS REs; a count of continuous OFDM symbols occupied by a DMRS; a DMRS configuration type; or a count of CDM groups occupied by a data-free DMRS antenna port.

In this technical solution, the network side device may send the configuration information of the data transmission channel to the terminal, so that the terminal may perform the channel estimation based on the AI model corresponding to the configuration information. In this way, the terminal may select an AI model suitable for current channel configuration to perform the channel estimation, thus improving an accuracy of AI-based channel estimation.

According to a third aspect of embodiments of the present disclosure, a communication device is provided. The communication device has an ability to implement part or all of functions of the terminal in the method described in the first aspect. For example, the communication device may have functions of some or all of the embodiments of the present disclosure, or may have a function of independently implementing any embodiment of the present disclosure. The functions may be implemented by hardware, or may be implemented by executing corresponding software using the hardware. The hardware or software includes one or more units or modules corresponding to the above functions.

In an implementation, a structure of the communication device includes: a transceiver module and a processing module. The processing module is configured to support the communication device to perform corresponding functions in the above method. The transceiver module is configured to support communication between the communication device and other devices. The communication device may further include a storage module coupled to the transceiver module and the processing module, which is configured to store necessary computer programs and data for the communication device.

As an example, the processing module may be a processor. The transceiver module may be a transceiver or a communication interface. The storage module may be a memory.

According to a fourth aspect of embodiments of the present disclosure, a communication device is provided. The communication device has an ability to implement part or all of functions of the network side device in the method described in the second aspect. For example, the communication device may have functions of some or all of the embodiments of the present disclosure, or may have a function of independently implementing any embodiment of the present disclosure. The functions may be implemented by hardware, or may be implemented by executing corresponding software using the hardware. The hardware or software includes one or more units or modules corresponding to the above functions.

In an implementation, a structure of the communication device includes: a transceiver module and a processing module. The processing module is configured to support the communication device to perform corresponding functions in the above method. The transceiver module is configured to support communication between the communication device and other devices. The communication device may further include a storage module coupled to the transceiver module and the processing module, which is configured to store necessary computer programs and data for the communication device.

As an example, the processing module may be a processor. The transceiver module may be a transceiver or a communication interface. The storage module may be a memory.

According to a fifth aspect of embodiments of the present disclosure, a communication device is provided. The communication device includes: a processor. When the processor calls a computer program stored in a memory, the method described in the first aspect above is implemented.

According to a sixth aspect of embodiments of the present disclosure, a communication device is provided. The communication device includes: a processor. When the processor calls a computer program stored in a memory, the method described in the second aspect above is implemented.

According to a seventh aspect of embodiments of the disclosure, a communication device is provided. The communication device includes: a processor and a memory having a computer program stored therein. When the processor executes the computer program stored in the memory, the communication device is caused to implement the method described in the first aspect above.

According to an eighth aspect of embodiments of the disclosure, a communication device is provided. The communication device includes: a processor and a memory having a computer program stored therein. When the processor executes the computer program stored in the memory, the communication device is caused to implement the method described in the second aspect above.

According to a ninth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the first aspect above.

According to a tenth aspect of embodiments of the disclosure, a communication device is provided. The communication device includes: a processor and an interface circuit. The interface circuit is configured to receive code instructions and transmit the code instructions to the processor. The processor is configured to run the code instructions to cause the device to perform the method described in the second aspect above.

According to an eleventh aspect of embodiments of the disclosure, a channel estimation system is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium is provided. The computer-readable storage medium is configured to store instructions used by the above terminal. When the instructions are executed, the terminal is caused to implement the method of the first aspect.

According to a thirteenth aspect of embodiments of the disclosure, a readable storage medium is provided. The readable storage medium is configured to store instructions used by the above network side device. When the instructions are executed, the network side device is caused to implement the method of the second aspect.

According to a fourteenth aspect of embodiments of the disclosure, a computer program product including a computer program is provided. When the computer program is running on a computer, the computer is caused to implement the method of the first aspect.

According to a fifteenth aspect of embodiments of the disclosure, a computer program product including a computer program is provided. When the computer program is running on a computer, the computer is caused to implement the method of the second aspect.

According to a sixteenth aspect of embodiments of the disclosure, a chip system is provided. The chip system includes at least one processor and an interface for supporting the terminal in implementing functions involved in the first aspect, e.g., determining or processing at least one of data or information involved in the method described above. In a possible design, the chip system further includes a memory. The memory is configured to store necessary computer programs and data for the terminal. The chip system may consist of chips or may include a chip and other discrete components.

According to a seventeenth aspect of embodiments of the disclosure, a chip system is provided. The chip system includes at least one processor and an interface for supporting the network side device in implementing functions involved in the second aspect, e.g., determining or processing at least one of data or information involved in the method described above. In a possible design, the chip system further includes a memory. The memory is configured to store necessary computer programs and data for the network side device. The chip system may consist of chips or may include a chip and other discrete components.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the present disclosure or the background, a description of the accompanying drawings used in the embodiments or the background is given below.
FIG. 1 is a schematic diagram of a communication system provided by an embodiment of the present disclosure.
FIG. 2 is a flowchart of a method for channel estimation provided by an embodiment of the present disclosure.
FIG. 3 is a flowchart of another method for channel estimation provided by an embodiment of the present disclosure.
FIG. 4 is a flowchart of yet another method for channel estimation provided by an embodiment of the present disclosure.
FIG. 5 is a flowchart of yet another method for channel estimation provided by an embodiment of the present disclosure.
FIG. 6 is a flowchart of yet another method for channel estimation provided by an embodiment of the present disclosure.
FIG. 7 is a flowchart of yet another method for channel estimation provided by an embodiment of the present disclosure.
FIG. 8 is a flowchart of yet another method for channel estimation provided by an embodiment of the present disclosure.
FIG. 9 is a flowchart of yet another method for channel estimation provided by an embodiment of the present disclosure.
FIG. 10 is a flowchart of yet another method for channel estimation provided by an embodiment of the present disclosure.
FIG. 11 is a schematic diagram of a communication device provided by an embodiment of the present disclosure.
FIG. 12 is a schematic diagram of another communication device provided by an embodiment of the present disclosure.
FIG. 13 is a schematic diagram of a chip provided by an embodiment of the present disclosure.

### DETAILED DESCRIPTION

Embodiments of the present disclosure are described in detail below, examples of which are shown in the accompanying drawings, in which the same or similar numbers represent the same or similar elements or elements with the same or similar functions. The embodiments described below with reference to the drawings are exemplary and are intended to explain the disclosure, and should not be construed as limiting the disclosure. In the description of the disclosure, unless otherwise stated, the character "/" means or, for example, A/B means A or B. The term "and/or" describes a relation of associated objects, which indicates three relations, for example, "A and/or B" indicates that A exists alone, A and B both exist, and B exists alone.

In order to better understand a method for channel estimation disclosed by an embodiment of the present disclosure, a communication system to which embodiments of the present disclosure applicable will be described below.

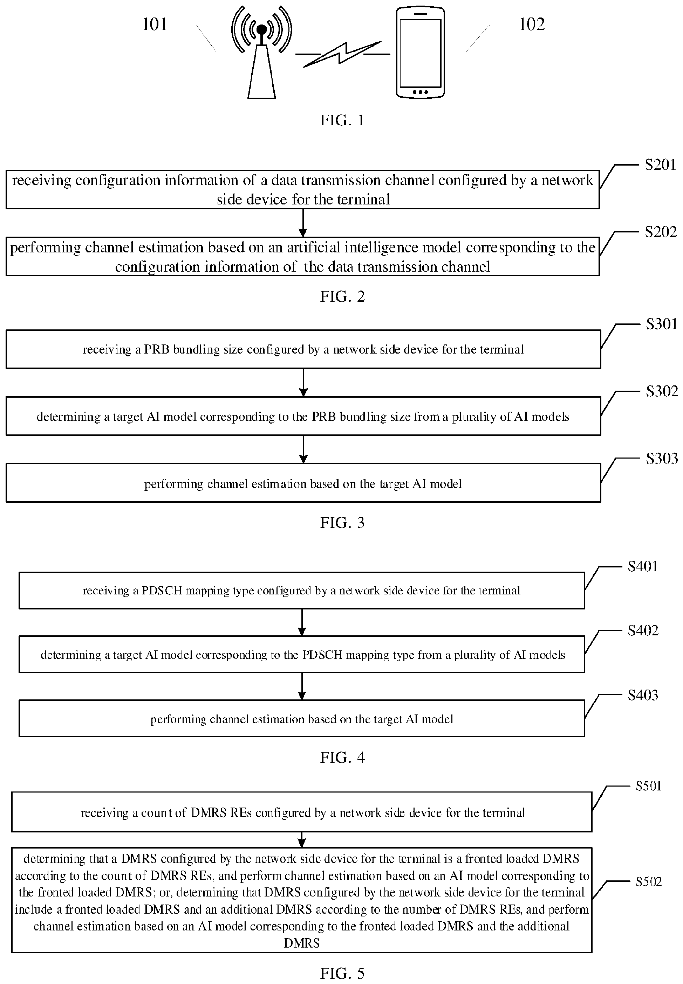

FIG. 1 is a schematic diagram of a communication system provided by an embodiment of the disclosure. The communication system may include, but is not limited to, one network side device and one terminal. The number and form of devices illustrated in FIG. 1 are only for examples and do not constitute a limitation on the embodiments of the disclosure. In practical applications, the communication system may include two or more network side devices and two or more terminals. The communication system as illustrated in FIG. 1 may include, for example, a network side device 101 and a terminal 102.

It is noteworthy that the technical solution of the embodiments of the disclosure can be applied to various communication systems, such as, a long term evolution (LTE) system, a 5th generation (5G) mobile communication system, a 5G new radio (NR) system, or other future new mobile communication systems.

The network side device 101 in the embodiments of the disclosure is an entity on a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. The specific technology and specific device form adopted by the network side device are not limited in the embodiments of the disclosure. The network side device according to the embodiments of the disclosure may be composed of a central unit (CU) and a distributed unit (DU). The CU may also be called as a control unit. The CU-DU structure may be used to divide a protocol layer of the network side device, such as a base station, such that some of the protocol layer functions are placed in the CU for centralized control, and some or all of the remaining protocol layer functions are distributed in the DU, which is centrally controlled by the CU.

The terminal 102 in the embodiments of the disclosure is an entity on a user side for receiving or transmitting signals, such as a cellular phone. The terminal may also be referred to as a terminal, a user equipment (UE), a mobile station (MS), a mobile terminal (MT), and the like. The terminal may be a car, a smart car, a mobile phone, a wearable device, a Pad with communication functions, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in the embodiments of the present disclosure is intended to clearly illustrate the technical solution according to the embodiments of the present disclosure, and does not constitute a limitation on the technical solution according to the embodiments of the present disclosure. Those skilled in the art understand that as system architectures evolve and new business scenarios emerge, the technical solution according to the embodiments of the present disclosure is also applicable to similar technical problems.

A method for channel estimation and a device thereof provided by the disclosure will be described in detail with reference to the accompanying drawings.

Please refer to FIG. 2, FIG. 2 is a flowchart of a method for channel estimation provided by an embodiment of the disclosure. The method is performed by a terminal. As illustrated in FIG. 2, the method may include, but is not limited to, following steps.

At step S201, configuration information of a data transmission channel configured by a network side device for the terminal is received.

In an embodiment of the present disclosure, the configuration information of the data transmission channel includes at least one of: a physical resource block (PRB) bundling size, a physical downlink shared channel (PDSCH) mapping type, a count of demodulation reference signal (DMRS) resource elements (REs), a count of continuous orthogonal frequency division multiplexing (OFDM) symbols occupied by a DMRS, a DMRS configuration type, or a count of code division multiplexing (CDM) groups occupied by a data-free DMRS antenna port.

At step S202, channel estimation is performed based on an artificial intelligence (AI) model corresponding to the configuration information of the data transmission channel.

For example, the terminal may select an appropriate AI model from a plurality of preset AI models for channel estimation based on specific contents of the received configuration information of the data transmission channel.

It should be noted that in the embodiments of the disclosure, the AI model may be a neural network model, for example, a deep neural network model or a convolutional neural network model. An architecture of the AI model corresponding to each different configuration information may be the same or different. An input of the AI model is a measurement value of a reference signal received by the terminal, and an output of the AI model is channel information of all resources of the data transmission channel used by the terminal. The AI model corresponding to each different configuration information can accurately extract the channel information of all resources of the data transmission channel corresponding to the configuration information through pre-training.

By implementing the embodiments of the disclosure, the terminal may receive the configuration information of the data transmission channel configured for the terminal by the network side device, and perform the channel estimation by using the AI model corresponding to the configuration information. In this way, the terminal may select an AI model suitable for current channel configuration to perform the channel estimation, thus improving an accuracy of AI-based channel estimation.

In an optional implementation of the embodiments of the disclosure, the configuration information of the data transmission channel may include a PRB bundling size, and the terminal may perform the channel estimation using a corresponding AI model according to the PRB bundling size. As an example, FIG. 3 is a flowchart of a method for channel estimation provided by an embodiment of the disclosure. The method is performed by a terminal. As illustrated in FIG. 3, the method may include, but is not limited to, following steps.

At step S301, a PRB bundling size configured by a network side device for the terminal is received.

For example, the terminal receives the configuration information of the data transmission channel configured by the network side device for the terminal, and obtains the PRB bundling size included in the configuration information.

At step S302, a target AI model corresponding to the PRB bundling size is determined from a plurality of AI models.

As an example, the terminal stores a plurality of AI models. Each AI model has a channel estimation function, and there is a correspondence between AI models and PRB bundling sizes. For example, in a case that the received PRB bundling size configured by the network side device for the terminal is two resource blocks (RBs), an AI model corresponding to this PRB bundling size is determined as the target AI model from the plurality of AI models based on the correspondence between AI models and PRB bundling sizes.

For another example, in a case that the received PRB bundling size configured by the network side device for the terminal is 4 RBs, an AI model corresponding to this PRB bundling size is determined as the target AI model from the plurality of AI models based on the correspondence between AI models and PRB bundling sizes.

At step S303, channel estimation is performed based on the target AI model.

For example, characteristics of the data transmission channel under current configuration are extracted based on the target AI model for channel estimation.

By implementing the embodiments of the disclosure, the terminal may perform the channel estimation using an appropriate AI model according to the received different PRB bundling size. In this way, the terminal may select an AI model suitable for current channel configuration to perform the channel estimation, thus improving an accuracy of AI-based channel estimation.

In an optional implementation of the embodiments of the disclosure, the configuration information of the data transmission channel may include a PDSCH mapping type, and the terminal may perform channel estimation using a corresponding AI model based on the PDSCH mapping type. As an example, FIG. 4 is a flowchart of a method for channel estimation provided by an embodiment of the disclosure. The method is performed by a terminal. As illustrated in FIG. 4, the method may include, but is not limited to, following steps.

At step S401, a PDSCH mapping type configured by a network side device for the terminal is received.

For example, the terminal receives the configuration information of the data transmission channel configured by the network side device for the terminal, and obtains the PDSCH mapping type included in the configuration information.

At step S402, a target AI model corresponding to the PDSCH mapping type is determined from a plurality of AI models.

As an example, the terminal stores a plurality of AI models. The plurality of AI models include a first AI model and a second AI model, both of which have a channel estimation function. There is a correspondence between the first AI model and a PDSCH mapping type A, and there is a correspondence between the second AI model and a PDSCH mapping type B. For example, in a case that the received PDSCH mapping type configured by the network side device for the terminal is type A, the first AI model corresponding to the type A is determined as the target AI model from the plurality of AI models.

For another example, in a case that the received PDSCH mapping type configured by the network side device for the terminal is type B, the second AI model corresponding to the type B is determined as the target AI model from the plurality of AI models.

In an embodiment of the disclosure, the PDSCH mapping type is the type A, which indicates that a first DMRS symbol is located at a symbol 2 or symbol 3 in a slot, and the PDSCH mapping type is the type B, which indicates that a first DMRS symbol is fixedly mapped to a first OFDM symbol of the PDSCH.

At step S403, channel estimation is performed based on the target AI model.

In an embodiment of the disclosure, step S403 may be implemented by using any of the embodiments of the present disclosure, which is not limited in the embodiments of the disclosure and will not be repeated here.

By implementing the embodiments of the disclosure, the terminal may perform the channel estimation using an appropriate AI model according to the received different PDSCH mapping type. In this way, the terminal may select an AI model suitable for current channel configuration to perform the channel estimation, thus improving an accuracy of AI-based channel estimation.

In an optional implementation of the embodiments of the disclosure, the configuration information of the data transmission channel may include a count of DMRS REs, and the terminal may perform channel estimation using a corresponding AI model based on the count of DMRS REs. As an example, FIG. 5 is a flowchart of a method for channel estimation provided by an embodiment of the disclosure. The method is performed by a terminal. As illustrated in FIG. 5, the method may include, but is not limited to, following steps.

At step S501, a count of DMRS REs configured by a network side device for the terminal is received.

For example, the terminal receives the configuration information of the data transmission channel configured by the network side device for the terminal, and obtains the count of DMRS REs included in the configuration information.

At step S502, it is determined that a DMRS configured by the network side device for the terminal is a fronted loaded DMRS according to the count of DMRS REs, and channel estimation is performed based on an AI model corresponding to the fronted loaded DMRS; or, it is determined that DMRSs configured by the network side device for the terminal include a fronted loaded DMRS and an additional DMRS according to the count of DMRS REs, and channel estimation is performed based on an AI model corresponding to the fronted loaded DMRS and the additional DMRS.

As an example, the terminal stores a plurality of AI models. The plurality of AI models include a first AI model and a second AI model, both of which have a channel estimation function. There is a correspondence between the first AI model and the fronted loaded DMRS, and there is a correspondence between the second AI model and the DMRSs including the fronted loaded DMRS and the additional DMRS. For example, in a case of determining that the DMRS configured by the network side device for the terminal is the fronted DMRS according to the count of DMRS REs included in the received configuration information of the data transmission channel, the first AI model corresponding to the fronted DMRS is determined from the plurality of AI models, and the channel estimation is performed based on the first AI model.

For another example, in a case of determining that the DMRSs configured by the network side device for the terminal include the fronted DMRS and the additional DMRS according to the count of DMRS REs included in the received configuration information of the data transmission channel, the second AI model corresponding to the DMRSs including the fronted DMRS and the additional DMRS is determined from the plurality of AI models, and the channel estimation is performed based on the second AI model.

By implementing the embodiments of the disclosure, the terminal may perform the channel estimation using an appropriate AI model according to the received different count of DMRS REs. In this way, the terminal may select an AI model suitable for current channel configuration to perform the channel estimation, thus improving an accuracy of AI-based channel estimation.

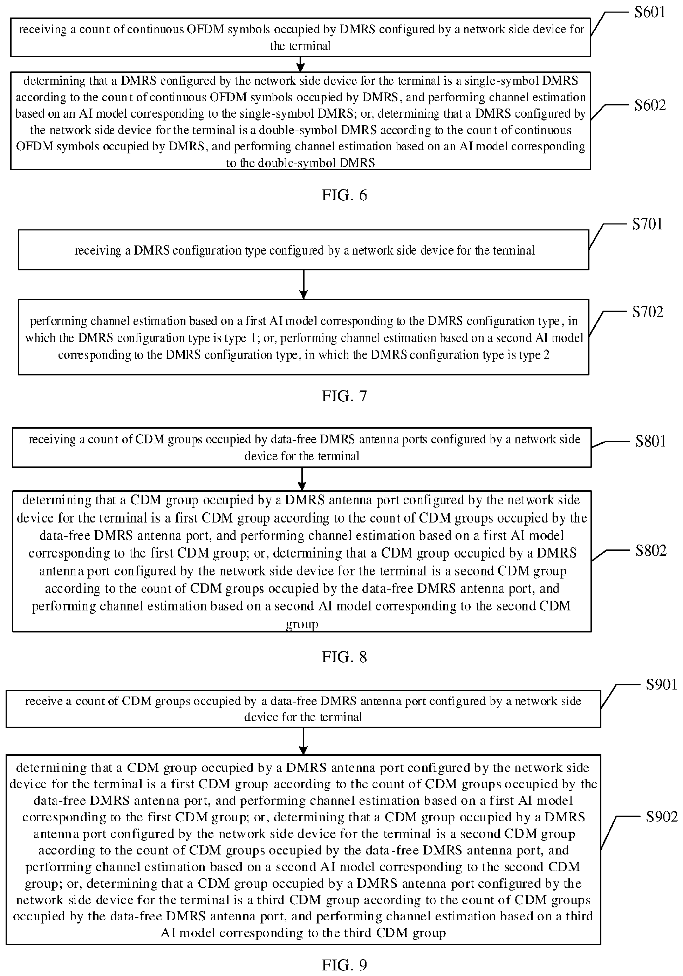

In an optional implementation of the embodiments of the disclosure, the configuration information of the data transmission channel may include a count of continuous OFDM symbols occupied by a DMRS, and the terminal may perform the channel estimation using a corresponding AI model according to the count of continuous OFDM symbols occupied by the DMRS. As an example, FIG. 6 is a flowchart of a method for channel estimation provided by an embodiment of the disclosure. The method is performed by a terminal. As illustrated in FIG. 6, the method may include, but is not limited to, following steps.

At step S601, a count of continuous OFDM symbols occupied by DMRS configured by a network side device for the terminal is received.

For example, the terminal receives the configuration information of the data transmission channel configured by the network side device for the terminal, and obtains the count of continuous OFDM symbols occupied by the DMRS included in the configuration information.

At step S602, it is determined that a DMRS configured by the network side device for the terminal is a single-symbol DMRS according to the count of continuous OFDM symbols occupied by the DMRS, and channel estimation is performed based on an AI model corresponding to the single-symbol DMRS; or, it is determined that a DMRS configured by the network side device for the terminal is a double-symbol DMRS according to the count of continuous OFDM symbols occupied by the DMRS, and channel estimation is performed based on an AI model corresponding to the double-symbol DMRS.

As an example, the terminal stores a plurality of AI models. The plurality of AI models include a first AI model and a second AI model, both of which have a channel estimation function. There is a correspondence between the first AI model and a single-symbol DMRS, and there is a correspondence between the second AI model and a double-symbol DMRS. For example, in a case that the count of continuous OFDM symbols included in the configuration information of the data transmission channel received by the terminal is 1, the terminal determines that the DMRS configured by the network side device for the terminal is the single-symbol DMRS, determines the first AI model corresponding to the single-symbol DMRS from the plurality of AI models, and performs the channel estimation based on the first AI model.

For another example, in a case that the count of continuous OFDM symbols included in the configuration information of the data transmission channel received by the terminal is 2, the terminal determines that the DMRS configured by the network side device for the terminal is the double-symbol DMRS, determines the second AI model corresponding to the double-symbol DMRS from the plurality of AI models, and performs the channel estimation based on the second AI model.

By implementing the embodiments of the disclosure, the terminal may perform the channel estimation using a corresponding AI model according to the received different count of continuous OFDM symbols occupied by the DMRS. In this way, the terminal may select an AI model suitable for current channel configuration to perform the channel estimation, thus improving an accuracy of AI-based channel estimation.

In an optional implementation of the embodiments of the disclosure, the configuration information of the data transmission channel may include a DMRS configuration type, and the terminal may perform the channel estimation using a corresponding AI model based on the DMRS configuration type. As an example, FIG. 7 is a flowchart of a method for channel estimation provided by an embodiment of the disclosure. The method is performed by a terminal. As illustrated in FIG. 7, the method may include, but is not limited to, following steps.

At step S701, a DMRS configuration type configured by a network side device for the terminal is received.

For example, the terminal receives the configuration information of the data transmission channel configured by the network side device for the terminal, and obtains the DMRS configuration type included in the configuration information.

At step S702, channel estimation is performed based on a first AI model corresponding to the DMRS configuration type, in which the DMRS configuration type is type 1; or, channel estimation is performed based on a second AI model corresponding to the DMRS configuration type, in which the DMRS configuration type is type 2.

The first AI model and the second AI model are different channel estimation models.

As an example, the terminal stores a plurality of AI models. The plurality of AI models include a first AI model and a second AI model, both of which have a channel estimation function. There is a correspondence between the first AI model and a DMRS configuration type 1, and there is a correspondence between the second AI model and a DMRS configuration type 2. For example, in a case that the DMRS configuration type configured by the network side device for the terminal is type 1, the first AI corresponding to the type 1 is determined from the plurality of AI models, and the channel estimation is performed based on the first AI model.

For another example, in a case that the DMRS configuration type configured by the network side device for the terminal is type 2, the second AI corresponding to the type 2 is determined from the plurality of AI models, and the channel estimation is performed based on the second AI model.

It should be noted that in an embodiment of the disclosure, the DMRS configuration type 1 refers to a DMRS with a frequency domain density of 6, and the DMRS configuration type 2 refers to a DMRS with a frequency domain density of 4.

By implementing the embodiments of the disclosure, the terminal may perform the channel estimation using an appropriate AI model according to the DMRS configuration type included in the received configuration information of a data transmission channel. In this way, the terminal may select an AI model suitable for current channel configuration to perform the channel estimation, thus improving an accuracy of AI-based channel estimation.

In an optional implementation of the embodiments of the disclosure, the configuration information of the data transmission channel may include a count of CDM groups occupied by a data-free DMRS antenna port, and the terminal may perform the channel estimation using a corresponding AI model according to the count of CDM groups occupied by the data-free DMRS antenna port. As an example, FIG. 8 is a flowchart of a method for channel estimation provided by an embodiment of the disclosure. The method is performed by a terminal. As illustrated in FIG. 8, the method may include, but is not limited to, following steps.

At step S801, a count of CDM groups occupied by a data-free DMRS antenna port configured by a network side device for the terminal is received.

For example, the terminal receives the configuration information of the data transmission channel configured by the network side device for the terminal, and obtains the count of CDM groups occupied by the data-free DMRS antenna port included in the configuration information.

At step S802, it is determined that a CDM group occupied by a DMRS antenna port configured by the network side device for the terminal is a first CDM group according to the count of CDM groups occupied by the data-free DMRS antenna port, and channel estimation is performed based on a first AI model corresponding to the first CDM group; or, it is determined that a CDM group occupied by a DMRS antenna port configured by the network side device for the terminal is a second CDM group according to the count of CDM groups occupied by the data-free DMRS antenna port, and channel estimation is performed based on a second AI model corresponding to the second CDM group;

The configured DMRS configuration type is DMRS configuration type 1, and the first AI model and the second AI model are different channel estimation models.

As an example, the terminal stores a plurality of AI models. The plurality of AI models include a first AI model and a second AI model, both of which have a channel estimation function. The first AI model corresponds to the first CDM group (i.e., CDM group 0), and the second AI model corresponds to the second CDM group (i.e., CDM group 1). For example, in a case that the terminal determines that the CDM group occupied by the DMRS antenna port configured by the network side device for the terminal is the first CDM group according to the count of CDM groups occupied by the data-free DMRS antenna port, the first AI model corresponding to the first CDM group is determined from the plurality of AI models, and the channel estimation is performed based on the first AI model.

For example, in a case that the terminal determines that the CDM group occupied by the DMRS antenna port configured by the network side device for the terminal is the second CDM group according to the count of CDM groups occupied by the data-free DMRS antenna port, the second AI model corresponding to the second CDM group is determined from the plurality of AI models, and the channel estimation is performed based on the second AI model.

By implementing the embodiments of the disclosure, the terminal may perform the channel estimation using the corresponding AI model according to the count of CDM groups occupied by the data-free DMRS antenna port. In this way, the terminal may select an AI model suitable for current channel configuration to perform the channel estimation, thus improving an accuracy of AI-based channel estimation.

In an optional implementation of the embodiments of the disclosure, the configuration information of the data transmission channel may include a count of CDM groups occupied by a data-free DMRS antenna port, and the terminal may perform channel estimation using a corresponding AI model based on the count of CDM groups occupied by the data-free DMRS antenna port. As an example, FIG. 9 is a flowchart of a method for channel estimation provided by an embodiment of the disclosure. The method is performed by a terminal. As illustrated in FIG. 9, the method may include, but is not limited to, following steps.

At step S901, a count of CDM groups occupied by a data-free DMRS antenna port configured by a network side device for the terminal is received.

For example, the terminal receives the configuration information of the data transmission channel configured by the network side device for the terminal, and obtains the count of CDM groups occupied by the data-free DMRS antenna port included in the configuration information.

At step S902, it is determined that a CDM group occupied by a DMRS antenna port configured by the network side device for the terminal is a first CDM group according to the count of CDM groups occupied by the data-free DMRS antenna port, and channel estimation is performed based on a first AI model corresponding to the first CDM group; or, it is determined that a CDM group occupied by a DMRS antenna port configured by the network side device for the terminal is a second CDM group according to the count of CDM groups occupied by the data-free DMRS antenna port, and channel estimation is performed based on a second AI model corresponding to the second CDM group; or, it is determined that a CDM group occupied by a DMRS antenna port configured by the network side device for the terminal is a third CDM group according to the count of CDM groups occupied by the data-free DMRS antenna port, and channel estimation is performed based on a third AI model corresponding to the third CDM group.

The configured DMRS configuration type is DMRS configuration type 2, and the first AI model, the second AI model and the third AI model are all different channel estimation models.

As an example, the terminal stores a plurality of AI models. The plurality of AI models include a first AI model, a second AI model and a third AI model, and the three models all have a channel estimation function. The first AI model corresponds to the first CDM group (i.e., CDM group 0), the second AI model corresponds to the second CDM group (i.e., CDM group 1), and the third AI model corresponds to the third CDM group (i.e., CDM group 2). For example, in a case that the terminal determines that the CDM group occupied by the DMRS antenna port configured by the network side device for the terminal is the first CDM group according to the count of CDM groups occupied by the data-free DMRS antenna port, the first AI model corresponding to the first CDM group is determined from the plurality of AI models, and the channel estimation is performed based on the first AI model.

For another example, in a case that the terminal determines that the CDM group occupied by the DMRS antenna port configured by the network side device for the terminal is the second CDM group according to the count of CDM groups occupied by the data-free DMRS antenna port, the second AI model corresponding to the second CDM group is determined from the plurality of AI models, and the channel estimation is performed based on the second AI model.

For another example, in a case that the terminal determines that the CDM group occupied by the DMRS antenna port configured by the network side device for the terminal is the third CDM group according to the count of CDM groups occupied by the data-free DMRS antenna port, the third AI model corresponding to the third CDM group is determined from the plurality of AI models, and the channel estimation is performed based on the third AI model.

By implementing the embodiments of the disclosure, the terminal may perform the channel estimation using the corresponding AI model according to the count of CDM groups occupied by the data-free DMRS antenna port. In this way, the terminal may select an AI model suitable for current channel configuration to perform the channel estimation, thus improving an accuracy of AI-based channel estimation.

It is understood that the above embodiments describe the implementations of the method for channel estimation in embodiments of the disclosure from the perspective of the terminal side. The embodiments of the disclosure also provide another method for channel estimation, and implementation of this method for channel estimation will be described below from the perspective of the network side device.

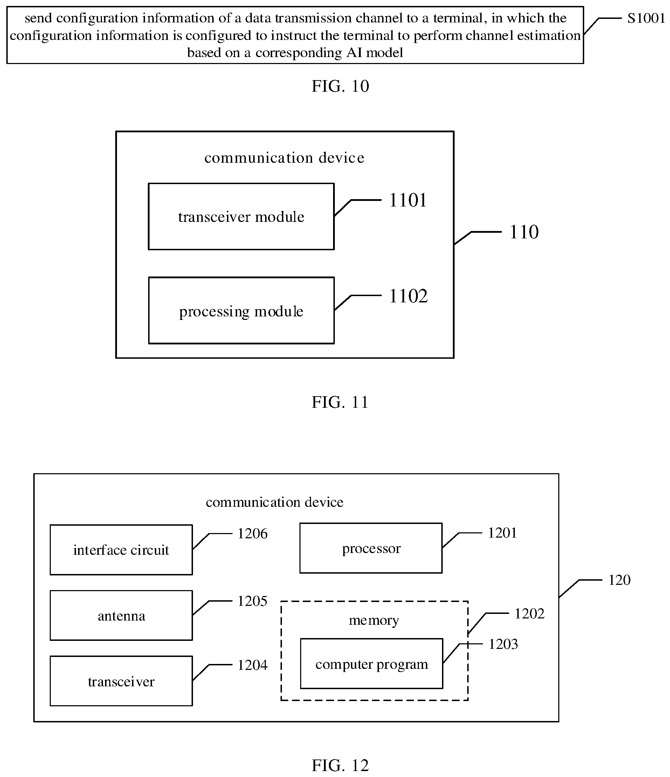

FIG. 10 is a flowchart of another method for channel estimation provided by an embodiment of the disclosure. The method is performed by a network side device. As illustrated in FIG. 10, the method may include, but is not limited to, a following step.

At step S1001, configuration information of a data transmission channel is sent to a terminal, in which the configuration information is configured to instruct the terminal to perform channel estimation based on a corresponding AI model.

In an embodiment of the disclosure, the configuration information of the data transmission channel includes at least one of: a PRB bundling size; a PDSCH mapping type; a count of DMRS REs; a count of continuous OFDM symbols occupied by a DMRS; a DMRS configuration type; or a count of CDM groups occupied by a data-free DMRS antenna port.

For example, the network side device sends the configuration information of the data transmission channel including at least one of the above information to the terminal, to instruct the terminal to perform the channel estimation based on the AI model corresponding to the configuration information.

By implementing the embodiments of the disclosure, the network side device may send the configuration information of the data transmission channel to the terminal, so that the terminal may perform the channel estimation based on the AI model corresponding to the configuration information. In this way, the terminal may select an AI model suitable for current channel configuration to perform the channel estimation, thus improving an accuracy of AI-based channel estimation.

In the above embodiments of the disclosure, the methods provided by embodiments of the disclosure are introduced from the perspectives of the terminal and the network side device respectively. In order to implement various functions in the methods provided by the above embodiments of the disclosure, the network side device and the terminal may include a hardware structure and a software module, to implement the above-mentioned functions in the form of the hardware structure, the software module, or a combination of the hardware structure and the software module. A certain function of the above functions may be implemented in the form of a hardware structure, a software module, or a combination of the hardware structure and the software module.

FIG. 11 is a schematic diagram of a communication device 110 provided in an embodiment of the disclosure. The communication device 110 in FIG. 11 may include a transceiver module 1101 and a processing module 1102. The transceiver module 1101 may include a sending module and/or a receiving module. The sending module is used to implement a sending function, and the receiving module is used to implement a receiving function. The transceiver module 1101 may implement a sending function and/or a receiving function.

The communication device 110 may be a terminal, or a device in the terminal, or a device that can be used in combination with the terminal. Or, the communication device 110 may be a network side device, or a device in the network side device, or a device that can be used in combination with the network side device.

In the case that the communication device 110 is a terminal, the transceiver module 1101 is configured to receive configuration information of a data transmission channel configured by a network side device for the terminal, and the processing module is configured to perform channel estimation based on an AI model corresponding to the configuration information of the data transmission channel.

In an implementation, the configuration information of the data transmission channel includes at least one of: a PRB bundling size; a PDSCH mapping type; a count of DMRS REs; a count of continuous OFDM symbols occupied by a DMRS; a DMRS configuration type; or a count of CDM groups occupied by a data-free DMRS antenna port.

In an optional implementation, the configuration information of the data transmission channel includes the PRB bundling size, and the processing module 1102 is further configured to: determine a target AI model corresponding to the PRB bundling size from a plurality of AI models; and perform the channel estimation based on the target AI model.

In an optional implementation, the configuration information of the data transmission channel includes the PDSCH mapping type, and the processing module 1102 is further configured to: determine a target AI model corresponding to the PDSCH mapping type from a plurality of AI models; and perform the channel estimation based on the target AI model.

In an optional implementation, the configuration information of the data transmission channel includes the count of DMRS REs, and the processing module 1102 is further configured to: determine that a DMRS configured by the network side device for the terminal is a fronted loaded DMRS according to the count of DMRS REs, and perform the channel estimation based on an AI model corresponding to the fronted loaded DMRS; or, determine that DMRSs configured by the network side device for the terminal include a fronted loaded DMRS and an additional DMRS according to the count of DMRS REs, and perform the channel estimation based on an AI model corresponding to the fronted loaded DMRS and the additional DMRS.

In an optional implementation, the configuration information of the data transmission channel includes the count of continuous OFDM symbols occupied by the DMRS, and the processing module 1102 is further configured to: determine that a DMRS configured by the network side device for the terminal is a single-symbol DMRS according to the count of continuous OFDM symbols occupied by the DMRS, and perform the channel estimation based on an AI model corresponding to the single-symbol DMRS; or, determine that a DMRS configured by the network side device for the terminal is a double-symbol DMRS according to the count of continuous OFDM symbols occupied by the DMRS, and perform the channel estimation based on an AI model corresponding to the double-symbol DMRS.

In an optional implementation, the configuration information of the data transmission channel includes the DMRS configuration type, and the processing module 1102 is further configured to: perform the channel estimation based on a first AI model corresponding to the DMRS configuration type, in which the DMRS configuration type is type 1; or, perform the channel estimation based on a second AI model corresponding to the DMRS configuration type, in which the DMRS configuration type is type 2, and the first AI model and the second AI model are different channel estimation models.

In an optional implementation, the configuration information of the data transmission channel includes the count of CDM groups occupied by the data-free DMRS antenna port, and the processing module 1102 is further configured to: determine that a CDM group occupied by a DMRS antenna port configured by the network side device for the terminal is a first CDM group according to the count of CDM groups occupied by the data-free DMRS antenna port, and perform the channel estimation based on a first AI model corresponding to the first CDM group; or, determine that a CDM group occupied by a DMRS antenna port configured by the network side device for the terminal is a second CDM group according to the count of CDM groups occupied by the data-free DMRS antenna port, and perform the channel estimation based on a second AI model corresponding to the second CDM group; in which the configured DMRS is DMRS configuration type 1, and the first AI model and the second AI model are different channel estimation models.

In an optional implementation, the configuration information of the data transmission channel includes the count of CDM groups occupied by the data-free DMRS antenna port, and the processing module 1102 is further configured to: determine that a CDM group occupied by a DMRS antenna port configured by the network side device for the terminal is a first CDM group according to the count of CDM groups occupied by the data-free DMRS antenna port, and perform the channel estimation based on a first AI model corresponding to the first CDM group; or, determine that a CDM group occupied by a DMRS antenna port configured by the network side device for the terminal is a second CDM group according to the count of CDM groups occupied by the data-free DMRS antenna port, and perform the channel estimation based on a second AI model corresponding to the second CDM group; or, determine that a CDM group occupied by a DMRS antenna port configured by the network side device for the terminal is a third CDM group according to the count of CDM groups occupied by the data-free DMRS antenna port, and perform the channel estimation based on a third AI model corresponding to the third CDM group; in which the configured DMRS is DMRS configuration type 2, and the first AI model, the second AI model and the third AI model are all different channel estimation models.

Through the device of the embodiments of the disclosure, the terminal may receive the configuration information of the data transmission channel configured for the terminal by the network side device, and perform the channel estimation based on the AI model corresponding to the configuration information. In this way, the terminal may select an AI model suitable for current channel configuration to perform channel estimation, thus improving an accuracy of AI-based channel estimation.

If the communication device 110 is a network side device, the transceiver module 1101 is configured to send configuration information of a data transmission channel to a terminal, in which the configuration information is configured to instruct the terminal to perform channel estimation based on the corresponding AI model.

In an implementation, the configuration information of the data transmission channel includes at least one of: a PRB bundling size; a PDSCH mapping type; a count of DMRS REs; a count of continuous OFDM symbols occupied by a DMRS; a DMRS configuration type; or a count of CDM groups occupied by a data-free DMRS antenna port.

Through the device of the embodiments of the disclosure, the network side device may send the configuration information of the data transmission channel to the terminal, so that the terminal may perform the channel estimation based on the AI model corresponding to the configuration information. In this way, the terminal may select an AI model suitable for current channel configuration to perform the channel estimation, thus improving an accuracy of AI-based channel estimation.

FIG. 12 is a schematic diagram of another communication device 120 provided by an embodiment of the disclosure. The communication device 120 may be a network side device or a terminal, or may be a chip, a chip system or a processor that supports the network side device to realize the above-described method, or may be a chip, a chip system or a processor that supports the terminal to realize the above-described method. The device may be used to realize the methods described in the above method embodiments with reference to the description of the above-described method embodiments.

The communication device 120 may include one or more processors 1201. The processor 1201 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing computer programs, and processing data of the computer programs.

Optionally, the communication device 120 may include one or more memories 1202 on which a computer program 1203 may be stored. The processor 1201 executes the computer program 1203 to cause the communication device 120 to perform the methods described in the above method embodiments. Optionally, the memory 1202 may also store data. The communication device 120 and the memory 1202 may be provided separately or may be integrated together.

Optionally, the communication device 120 may also include a transceiver 1204 and an antenna 1205. The transceiver 1204 may be referred to as a transceiver unit, a transceiver machine, or a transceiver circuit, for realizing a transceiver function. The transceiver 1204 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 120 may also include one or more interface circuits 1206. The interface circuits 1206 are used to receive code instructions and transmit the code instructions to the processor 1201. The processor 1201 runs the code instructions to cause the communication device 120 to perform the methods described in the method embodiments.

If the communication device 120 is a terminal, the processor 1201 executes steps S202 and S203 in FIG. 2, steps S302 and S303 in FIG. 3, step S402 and S403 in FIG. 4, step S502 in FIG. 5, step S602 in FIG. 6, step S702 in FIG. 7, step S802 in FIG. 8, and step S902 in FIG. 9. The transceiver 1204 is configured to execute step S201 in FIG. 2, step S301 in FIG. 3, step S401 in FIG. 4, step S501 in FIG. 5, step S601 in FIG. 6, step S701 in FIG. 7, step S801 in FIG. 8, and step S901 in FIG. 9.

If the communication device 120 is a network side device, the transceiver 1204 executes step S1001 in FIG. 10.

In an implementation, the processor 1201 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1201 may store a computer program. When the computer program runs on the processor 1201, the communication device 120 is caused to perform the methods described in the method embodiments above. The computer program 1203 may be solidified in the processor 1201, and in such case the processor 1201 may be implemented by hardware.

In an implementation, the communication device 120 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network side device or a terminal, but the scope of the communication device described in the disclosure is not limited thereto, and the structure of the communication device may not be limited by FIG. 12. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network side device, a cloud device, an artificial intelligence device, and the like; and
(6) others.

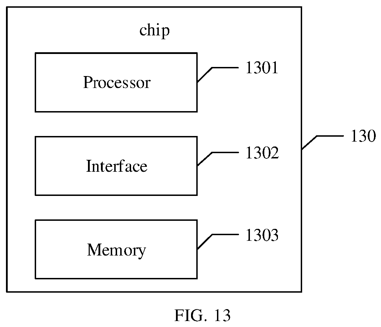

The case that the communication device may be a chip or a chip system can be referred to the schematic diagram of the chip shown in FIG. 13. The chip 130 shown in FIG. 13 includes a processor 1301 and an interface 1302. There may be one or more processors 1301, and there may be multiple interfaces 1302.

For the case where the chip is used to implement the function of the terminal in the embodiments of the present disclosure,
the interface 1302 is configured to receive configuration information of a data transmission channel configured by a network side device for the terminal, and the processor 1301 is configured to perform channel estimation based on an AI model corresponding to the configuration information of the data transmission channel.

In an implementation, the configuration information of the data transmission channel includes at least one of: a PRB bundling size; a PDSCH mapping type; a count of DMRS REs; a count of continuous OFDM symbols occupied by a DMRS; a DMRS configuration type; or a count of CDM groups occupied by a data-free DMRS antenna port.

In an optional implementation, the configuration information of the data transmission channel includes the PRB bundling size, and the processor 1301 is further configured to: determine a target AI model corresponding to the PRB bundling size from a plurality of AI models; and perform the channel estimation based on the target AI model.

In an optional implementation, the configuration information of the data transmission channel includes the PDSCH mapping type, and the processor 1301 is further configured to: determine a target AI model corresponding to the PDSCH mapping type from a plurality of AI models; and perform the channel estimation based on the target AI model.

In an optional implementation, the configuration information of the data transmission channel includes the count of DMRS REs, and the processor 1301 is further configured to: determine that a DMRS configured by the network side device for the terminal is a fronted loaded DMRS according to the count of DMRS REs, and perform the channel estimation based on an AI model corresponding to the fronted loaded DMRS; or, determine that DMRSs configured by the network side device for the terminal include a fronted loaded DMRS and an additional DMRS according to the count of DMRS REs, and perform the channel estimation based on an AI model corresponding to the fronted loaded DMRS and the additional DMRS.

In an optional implementation, the configuration information of the data transmission channel includes the count of continuous OFDM symbols occupied by DMRS, and the processor 1301 is further configured to: determine that a DMRS configured by the network side device for the terminal is a single-symbol DMRS according to the count of continuous OFDM symbols occupied by DMRS, and perform the channel estimation based on an AI model corresponding to the single-symbol DMRS; or, determine that a DMRS configured by the network side device for the terminal is a double-symbol DMRS according to the count of continuous OFDM symbols occupied by DMRS, and perform the channel estimation based on an AI model corresponding to the double-symbol DMRS.

In an optional implementation, the configuration information of the data transmission channel includes the DMRS configuration type, and the processor 1301 is further configured to: perform the channel estimation based on a first AI model corresponding to the DMRS configuration type, in which the DMRS configuration type is type 1; or, perform the channel estimation based on a second AI model corresponding to the DMRS configuration type, in which the DMRS configuration type is type 2, and the first AI model and the second AI model are different channel estimation models.

In an optional implementation, the configuration information of the data transmission channel includes the count of CDM groups occupied by the data-free DMRS antenna port, and the processor 1301 is further configured to: determine that a CDM group occupied by a DMRS antenna port configured by the network side device for the terminal is a first CDM group according to the count of CDM groups occupied by the data-free DMRS antenna port, and perform the channel estimation based on a first AI model corresponding to the first CDM group; or, determine that a CDM group occupied by a DMRS antenna port configured by the network side device for the terminal is a second CDM group according to the count of CDM groups occupied by the data-free DMRS antenna port, and perform the channel estimation based on a second AI model corresponding to the second CDM group; in which the configured DMRS is DMRS configuration type 1, and the first AI model and the second AI model are different channel estimation models.

In an optional implementation, the configuration information of the data transmission channel includes the count of CDM groups occupied by the data-free DMRS antenna port, and the processor 1301 is further configured to: determine that a CDM group occupied by a DMRS antenna port configured by the network side device for the terminal is a first CDM group according to the count of CDM groups occupied by the data-free DMRS antenna port, and perform the channel estimation based on a first AI model corresponding to the first CDM group; or, determine that a CDM group occupied by a DMRS antenna port configured by the network side device for the terminal is a second CDM group according to the count of CDM groups occupied by the data-free DMRS antenna port, and perform the channel estimation based on a second AI model corresponding to the second CDM group; or, determine that a CDM group occupied by a DMRS antenna port configured by the network side device for the terminal is a third CDM group according to the count of CDM groups occupied by the data-free DMRS antenna port, and perform the channel estimation based on a third AI model corresponding to the third CDM group; in which the configured DMRS is DMRS configuration type 2, and the first AI model, the second AI model and the third AI model are all different channel estimation models.

For the case that the chip is used to realize the functions of the network-side device in the embodiments of the disclosure, the interface 1302 is configured to send configuration information of a data transmission channel to a terminal, in which the configuration information is configured to instruct the terminal to perform channel estimation based on the corresponding AI model.

In an implementation, the configuration information of the data transmission channel includes at least one of: a PRB bundling size; a PDSCH mapping type; a count of DMRS REs; a count of continuous OFDM symbols occupied by a DMRS; a DMRS configuration type; or a count of CDM groups occupied by a data-free DMRS antenna port.

Optionally, the chip also includes a memory 1303 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The embodiments of the disclosure also provide a channel estimation system. The system includes a communication device acting as a terminal and a communication device acting as a network side device in the aforementioned embodiment of FIG. 11, or the system includes a communication device acting as a terminal and a communication device acting as a network side device in the aforementioned embodiment of FIG. 12.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions within the technical scope disclosed by the disclosure, which shall be covered by the scope of protection of the disclosure. Therefore, the scope of protection of the disclosure shall be governed by the scope of protection of the attached claims.

## Claims

1. A method for channel estimation, performed by a terminal, comprising:
receiving configuration information of a data transmission channel configured by a network side device for the terminal; and
performing channel estimation based on an artificial intelligence model corresponding to the configuration information of the data transmission channel.

2. The method of claim 1, wherein the configuration information of the data transmission channel comprises at least one of:
a physical resource block bundling size;
a physical downlink shared channel (PDSCH) mapping type;
a count of demodulation reference signal (DMRS) resource elements (REs);
a count of continuous orthogonal frequency division multiplexing (OFDM) symbols occupied by a DMRS;
a DMRS configuration type; or
a count of code division multiplexing (CDM) groups occupied by a data-free DMRS antenna port.

3. The method of claim 2, wherein the configuration information of the data transmission channel comprises the physical resource block bundling size, and performing the channel estimation based on the artificial intelligence model corresponding to the configuration information of the data transmission channel comprises:
determining a target artificial intelligence model corresponding to the physical resource block bundling size from a plurality of artificial intelligence models; and
performing the channel estimation based on the target artificial intelligence model.

4. The method of claim 2, wherein the configuration information of the data transmission channel comprises the PDSCH mapping type, and performing the channel estimation based on the artificial intelligence model corresponding to the configuration information of the data transmission channel comprises:
determining a target artificial intelligence model corresponding to the PDSCH mapping type from a plurality of artificial intelligence models; and
performing the channel estimation based on the target artificial intelligence model.

5. The method of claim 2, wherein the configuration information of the data transmission channel comprises the count of DMRS REs, and performing the channel estimation based on the artificial intelligence model corresponding to the configuration information of the data transmission channel comprises:
determining that a DMRS configured by the network side device for the terminal is a fronted loaded DMRS according to the count of DMRS REs, and performing the channel estimation based on an artificial intelligence model corresponding to the fronted loaded DMRS; or
determining that DMRSs configured by the network side device for the terminal comprises a fronted loaded DMRS and an additional DMRS according to the count of DMRS REs, and performing the channel estimation based on an artificial intelligence model corresponding to the fronted loaded DMRS and the additional DMRS.

6. The method of claim 2, wherein the configuration information of the data transmission channel comprises the count of continuous OFDM symbols occupied by the DMRS, and performing the channel estimation based on the artificial intelligence model corresponding to the configuration information of the data transmission channel comprises:
determining that a DMRS configured by the network side device for the terminal is a single-symbol DMRS according to the count of continuous OFDM symbols occupied by the DMRS, and performing the channel estimation based on an artificial intelligence model corresponding to the single-symbol DMRS; or
determining that a DMRS configured by the network side device for the terminal is a double-symbol DMRS according to the count of continuous OFDM symbols occupied by the DMRS, and performing the channel estimation based on an artificial intelligence model corresponding to the double-symbol DMRS.

7. The method of claim 2, wherein the configuration information of the data transmission channel comprises the DMRS configuration type, and performing the channel estimation based on the artificial intelligence model corresponding to the configuration information of the data transmission channel comprises:
performing the channel estimation based on a first artificial intelligence model corresponding to the DMRS configuration type, wherein the DMRS configuration type is type 1; or
performing the channel estimation based on a second artificial intelligence model corresponding to the DMRS configuration type, wherein the DMRS configuration type is type 2, and the first artificial intelligence model and the second artificial intelligence model are different channel estimation models.

8. The method of claim 2, wherein the configuration information of the data transmission channel comprises the count of CDM groups occupied by the data-free DMRS antenna port, and performing the channel estimation based on the artificial intelligence model corresponding to the configuration information of the data transmission channel comprises:
determining that a CDM group occupied by a DMRS antenna port configured by the network side device for the terminal is a first CDM group according to the count of CDM groups occupied by the data-free DMRS antenna port, and performing the channel estimation based on a first artificial intelligence model corresponding to the first CDM group; or
determining that a CDM group occupied by a DMRS antenna port configured by the network side device for the terminal is a second CDM group according to the count of CDM groups occupied by the data-free DMRS antenna port, and performing the channel estimation based on a second artificial intelligence model corresponding to the second CDM group;
wherein the configured DMRS is DMRS configuration type 1, and the first artificial intelligence model and the second artificial intelligence model are different channel estimation models.

9. The method of claim 2, wherein the configuration information of the data transmission channel comprises the count of CDM groups occupied by the data-free DMRS antenna port, and performing the channel estimation based on the artificial intelligence model corresponding to the configuration information of the data transmission channel comprises:
determining that a CDM group occupied by a DMRS antenna port configured by the network side device for the terminal is a first CDM group according to the count of CDM groups occupied by the data-free DMRS antenna port, and performing the channel estimation based on a first artificial intelligence model corresponding to the first CDM group; or
determining that a CDM group occupied by a DMRS antenna port configured by the network side device for the terminal is a second CDM group according to the count of CDM groups occupied by the data-free DMRS antenna port, and performing the channel estimation based on a second artificial intelligence model corresponding to the second CDM group; or
determining that a CDM group occupied by a DMRS antenna port configured by the network side device for the terminal is a third CDM group according to the count of CDM groups occupied by the data-free DMRS antenna port, and performing the channel estimation based on a third artificial intelligence model corresponding to the third CDM group;
wherein the configured DMRS is DMRS configuration type 2, and the first artificial intelligence model, the second artificial intelligence model and the third artificial intelligence model are all different channel estimation models.

10. A method for channel estimation, performed by a network side device, comprising:
sending configuration information of a data transmission channel to a terminal, wherein the configuration information is configured to instruct the terminal to perform channel estimation based on a corresponding artificial intelligence model.

11. The method of claim 10, wherein the configuration information of the data transmission channel comprises at least one of:
a physical resource block bundling size;
a physical downlink shared channel (PDSCH) mapping type;
a count of demodulation reference signal (DMRS) resource elements (REs);
a count of continuous orthogonal frequency division multiplexing (OFDM) symbols occupied by a DMRS;
a DMRS configuration type; or
a count of code division multiplexing (CDM) groups occupied by a data-free DMRS antenna port.

12. A communication device, comprising:
a transceiver module, configured to receive configuration information of a data transmission channel configured by a network side device for a terminal; and
a processing module, configured to perform channel estimation based on an artificial intelligence model corresponding to the configuration information of the data transmission channel.

13. The device of claim 12, wherein the configuration information of the data transmission channel comprises at least one of:
a physical resource block bundling size;
a physical downlink shared channel (PDSCH) mapping type;
a count of demodulation reference signal (DMRS) resource elements (REs);
a count of continuous orthogonal frequency division multiplexing (OFDM) symbols occupied by a DMRS;
a DMRS configuration type; or
a count of code division multiplexing (CDM) groups occupied by a data-free DMRS antenna port.

14. The device of claim 13, wherein the configuration information of the data transmission channel comprises the physical resource block bundling size, and the processing module is further configured to:
determine a target artificial intelligence model corresponding to the physical resource block bundling size from a plurality of artificial intelligence models; and
perform the channel estimation based on the target artificial intelligence model.

15. The device of claim 13, wherein the configuration information of the data transmission channel comprises the PDSCH mapping type, and the processing module is further configured to:
determine a target artificial intelligence model corresponding to the PDSCH mapping type from a plurality of artificial intelligence models; and
perform the channel estimation based on the target artificial intelligence model.

16. The device of claim 13, wherein the configuration information of the data transmission channel comprises the count of DMRS REs, and the processing module is further configured to:
determine that a DMRS configured by the network side device for the terminal is a fronted loaded DMRS according to the count of DMRS REs, and perform the channel estimation based on an artificial intelligence model corresponding to the fronted loaded DMRS; or
determine that DMRSs configured by the network side device for the terminal comprises a fronted loaded DMRS and an additional DMRS according to the count of DMRS REs, and perform the channel estimation based on an artificial intelligence model corresponding to the fronted loaded DMRS and the additional DMRS.

17. The device of claim 13, wherein the configuration information of the data transmission channel comprises the count of continuous OFDM symbols occupied by the DMRS, and the processing module is further configured to:
determine that a DMRS configured by the network side device for the terminal is a single-symbol DMRS according to the count of continuous OFDM symbols occupied by the DMRS, and perform the channel estimation based on an artificial intelligence model corresponding to the single-symbol DMRS; or
determine that a DMRS configured by the network side device for the terminal is a double-symbol DMRS according to the count of continuous OFDM symbols occupied by the DMRS, and perform the channel estimation based on an artificial intelligence model corresponding to the double-symbol DMRS.

18. The device of claim 13, wherein the configuration information of the data transmission channel comprises the DMRS configuration type, and the processing module is further configured to:
perform the channel estimation based on a first artificial intelligence model corresponding to the DMRS configuration type, wherein the DMRS configuration type is type 1; or,
perform the channel estimation based on a second artificial intelligence model corresponding to the DMRS configuration type, wherein the DMRS configuration type is type 2, and the first artificial intelligence model and the second artificial intelligence model are different channel estimation models.

19. The device of claim 13, wherein the configuration information of the data transmission channel comprises the count of CDM groups occupied by the data-free DMRS antenna port, and the processing module is further configured to:
determine that a CDM group occupied by a DMRS antenna port configured by the network side device for the terminal is a first CDM group according to the count of CDM groups occupied by the data-free DMRS antenna port, and perform the channel estimation based on a first artificial intelligence model corresponding to the first CDM group; or,
determine that a CDM group occupied by a DMRS antenna port configured by the network side device for the terminal is a second CDM group according to the count of CDM groups occupied by the data-free DMRS antenna port, and perform the channel estimation based on a second artificial intelligence model corresponding to the second CDM group;
wherein the configured DMRS is DMRS configuration type 1, and the first artificial intelligence model and the second artificial intelligence model are different channel estimation models.

20. The device of claim 13, wherein the configuration information of the data transmission channel comprises the count of CDM groups occupied by the data-free DMRS antenna port, and the processing module is further configured to:
determine that a CDM group occupied by a DMRS antenna port configured by the network side device for the terminal is a first CDM group according to the count of CDM groups occupied by the data-free DMRS antenna port, and perform the channel estimation based on a first artificial intelligence model corresponding to the first CDM group; or,
determine that a CDM group occupied by a DMRS antenna port configured by the network side device for the terminal is a second CDM group according to the count of CDM groups occupied by the data-free DMRS antenna port, and perform the channel estimation based on a second artificial intelligence model corresponding to the second CDM group; or,
determine that a CDM group occupied by a DMRS antenna port configured by the network side device for the terminal is a third CDM group according to the count of CDM groups occupied by the data-free DMRS antenna port, and perform the channel estimation based on a third artificial intelligence model corresponding to the third CDM group;
wherein the configured DMRS is DMRS configuration type 2, and the first artificial intelligence model, the second artificial intelligence model and the third artificial intelligence model are all different channel estimation models.

21. A communication device, comprising:
a transceiver module, configured to send configuration information of a data transmission channel to a terminal, wherein the configuration information is configured to instruct the terminal to perform channel estimation based on a corresponding artificial intelligence model.

22. The apparatus of claim 21, wherein the configuration information of the data transmission channel comprises at least one of:
a physical resource block bundling size;
a physical downlink shared channel (PDSCH) mapping type;
a count of demodulation reference signal (DMRS) resource elements (REs);
a count of continuous orthogonal frequency division multiplexing (OFDM) symbols occupied by a DMRS;
a DMRS configuration type; or
a count of code division multiplexing (CDM) groups occupied by a data-free DMRS antenna port.

23. A communication device, comprising a processor and a memory having a computer program stored therein, wherein when the processor executes the computer program stored in the memory, the device is caused to execute the method according to any one of claims 1-9.

24. A communication device, comprising a processor and a memory having a computer program stored therein, wherein when the processor executes the computer program stored in the memory, the device is caused to execute the method according to claim 10 or 11.

25. A computer-readable storage medium for storing instructions, wherein when the instructions are executed, the method according to any one of claims 1-9 is implemented.

26. A computer-readable storage medium for storing instructions, wherein when the instructions are executed, the method according to claim 10 or 11 is implemented.
